# EUROPEAN PATENT SPECIFICATION

(11) **EP 2 239 956 B1**
(45) Date of publication and mention of the grant of the patent: **22.07.2015**
(21) Application number: 10159203.8
(22) Date of filing: 07.04.2010
(51) Int. Cl.: H04L 12/723, H04L 12/721, H04Q 11/00, H04L 12/46

(54) **Method, apparatus and system for ip/optical convergence**
Verfahren, Vorrichtung und System für eine optische IP-Konvergenz
Procédé, appareil et système pour convergence IP/optique

(30) Priority: 07.04.2009 CN 200910106517
(43) Date of publication of application: 13.10.2010
(73) Proprietor: Huawei Technologies Co., Ltd., Longgang District Shenzhen, Guangdong 518129 (CN)
(72) Inventor: Enfu, Wang, Shenzhen Guangdong 518129 (CN)
(74) Representative: Körber, Martin Hans

(56) References cited:
- XI YANG ET AL: "GMPLS-Based Dynamic Provisioning and Traffic Engineering of High-Capacity Ethernet Circuits in Hybrid Optical/Packet Networks" INFOCOM 2006. 25TH IEEE INTERNATIONAL CONFERENCE ON COMPUTER COMMUNICA TIONS. PROCEEDINGS, IEEE, PI, 1 April 2006 (2006-04-01), pages 1-5, XP031072074 ISBN: 978-1-4244-0221-2
- DON FEDYK ET AL: "GMPLS control of Ethernet PBB-TE; draft-ietf-ccamp-gmpls-ethernet-pbb te-01.txt" IETF STANDARD-WORKING-DRAFT, INTERNET ENGINEERING TASK FORCE, IETF, CH, vol. ccamp, no. 1, 14 July 2008 (2008-07-14), XP015055747 ISSN: 0000-0004
- CHIN-WEI LIN ET AL: "OIF UNI and IETF GMPLS interoperability: An optical UNI converter" COMMUNICATION TECHNOLOGY, 2008. ICCT 2008. 11TH IEEE INTERNATIONAL CONFERENCE ON, IEEE, PISCATAWAY, NJ, USA LNKD- DOI:10.1109/ICCT.2008.4716277, 10 November 2008 (2008-11-10), pages 398-401, XP031374985 ISBN: 978-1-4244-2250-0
- OIF OPTICAL INTERNETWORKING FORUM: "User Network Interface (UNI) 1.0 Signaling Specification, Release 2. OIF-UNI-01.0-R2-RSVP - RSVP Extensions for User Network Interface (UNI) 1.0 Signaling, Release 2" INTERNET CITATION 27 February 2004 (2004-02-27), XP009106383 Retrieved from the Internet: URL:http://www.oiforum.com/public/document s/OIF-UNI-01.0-R2-RSVP.pdf [retrieved on 2008-09-26]
- TAKACS A ET AL: "GMPLS controlled ethernet: an emerging packet-oriented transport technology", IEEE COMMUNICATIONS MAGAZINE, IEEE SERVICE CENTER, PISCATAWAY, US, vol. 46, no. 9, 1 September 2008 (2008-09-01), pages 118-124, XP011234297, ISSN: 0163-6804, DOI: DOI:10.1109/MCOM.2008.4623716
- NETWORK WORKING GROUP T KAWAKAMI G VELEV MATSUSHITA N OGASHIWA JAIST H OGAWA CRL: "Method to Setup LSP using VLAN Tag Switching; draft-kawakami-mpls-lsp-vlan-00.txt", 20030201, 1 February 2003 (2003-02-01), XP015003902, ISSN: 0000-0004
- SPRECHER D BERECHYA SIEMENS AG F LINGYUAN HUAWEI TECHNOLOGIES J LIU GUANGZHOU TELECOM N: "GMPLS Control of Ethernet VLAN Cross Connect Switches; draft-sprecher-gels-ethernet-vlan-xc-01.tx t", 20060316, no. 1, 16 March 2006 (2006-03-16), XP015044615, ISSN: 0000-0004

## Description

### FIELD OF THE TECHNOLOGY

The present invention relates to the communication field, and more particularly to a method, an apparatus, and a system for Internet Protocol (IP)/optical convergence.

### BACKGROUND OF THE INVENTION

A prototype basis of the generalized multi-protocol label switching (GMPLS) is the multi-protocol label switching (MPLS). The working principle of the MPLS is described as follows. When a data packet reaches an ingress label switching router (LSR) of an MPLS network, the ingress LSR determines a forwarding equivalence class (FEC) which the packet belongs to by analyzing an information header of the data packet. The FEC aggregates some data streams having certain common features. The data is processed by the LSRs in the same mode during forwarding. Then, a forwarding table is looked up to add a label associated with the FEC in the front of the data packet. The subsequent LSRs do not need to look up an IP packet header, but only need to perform switching according to a label of the data packet to determine a forwarding egress. A new label is adopted to replace the old label before forwarding. The data packet is then forwarded to a next LSR. When the data packet reaches an egress LSR, the egress LSR removes the label from the data packet and forwards the data packet in a conventional IP forwarding mode.

The MPLS technology is mainly pertinent to packet switching, which does not support time division multiplexing (TDM) switching and wave division multiplexing (WDM) switching. In order to cater to the demands of an intellectual optical network in dynamically providing network resources and transferring signaling, the conventional MPLS needs to be expanded and updated. The GMPLS is just a product of the expansion of the MPLS towards the optical network. The GMPLS supports packet switching, time division switching, wavelength switching, and optical fiber switching. Under the GMPLS control protocol, an optical network device may automatically collect optical channel resources, calculate a reasonable optical path, and establish an optical transmission path rapidly as required according to a service demand input by a network management system (NMS) or service request information transferred by other devices (such as a router). Therefore, the capabilities of the optical network device in terms of service deployment, service adjustment, and service assurance are greatly increased.

In order to apply the GMPLS to the optical network, a routing device, mainly a router device is required to support the GMPLS. The optical transmission path is configured to bear a service data packet sent by a routing device (such as a router). If the router supports the GMPLS, the interaction at a control plane may be realized between the router and the optical network device.

In the prior art, the following method is adopted for solving the problem. According to the demand of the router, especially information such as a destination address, a bandwidth, and a quality of service (QOS) parameter carried in a request message sent by the router, a bidirectional GMPLS user network interface (GMPLS UNI) tunnel is established. A starting point of the tunnel is a source router and an end point of the tunnel is a destination router.

After the GMPLS UNI tunnel is successfully established, routers in the routing network may use the GMPLS UNI tunnel to participate in the routing calculation and path selection of the MPLS tunnel, after being correspondingly modified at the IP/MPLS control plane. In this way, the IP/MPLS service in the prior art can be allocated on the GMPLS UNI tunnel. The source router needs to declare the tunnel to other routers in the routing network in a forwarding adjacency (FA) mode.

At a forwarding plane, a forwarding table containing the GMPLS UNI tunnel is looked up to realize the forwarding of the IP/MPLS OVER GMPLS UNI tunnel. Finally, a packet sent from the source router carries a particular layer of label of the GMPLS UNI tunnel.

In the processing method, the GMPLS UNI tunnel needs to be declared in the FA mode, that is, the established tunnel needs to be declared to neighbor devices, a layer of label needs to be further encapsulated at the forwarding plane at the same time, the router also needs to be modified correspondingly, and the forwarding performance is influenced as well.

Document XI YANG ET AL: "GMPLS-Based Dynamic Provisioning and Traffic Engineering of High-Capacity Ethernet Circuits in Hybrid Optical/Packet Networks" INFOCOM 2006. 25TH IEEE INTERNATIONAL CONFERENCE ON COMPUTER COMMUNICATIONS. PROCEEDINGS, IEEE, PI, 1 April 2006 (2006-04-01), pages 1-5, XP031072074 ISBN: 978-1-4244-0221-2 discloses a solution of GMPLS-Based Dynamic Provisioning and Traffic Engineering of High-Capacity Ethernet Circuits in Hybrid Optical/Packet Networks. The solution bases on Virtual Label Switch Router (VLSR) and Continuous End-to-End VLAN. The solution includes VLSR Design, End-to-End VLAN Routing and Signaling, Local ID (The Edge Control Method), User Network Interface and Provisioning Modes.

This document further discloses that Local ID is a feature that enables users to provision LSPs between to edge VLSRs instead of two end systems (hosts). There are four types of Local IDs defined which allow a LSP to be terminated in the user defined and flexible combinations of one port, multiple ports, tagged ports, or untagged ports. The ingress/egress control channel can also be implicitly associated with some Local IDs via configuration.

Document D5 (TAKACS A ET AL: "GMPLS controlled Ethernet: an emerging packet-oriented transport technology") discloses the concepts and standards work allowing GMPLS to control Ethernet. Particularly, an initiator BEB sends an RSVP-TE Path message requesting a generalized label for an Ethernet-LSP. It includes the upstream label formed by its local MAC address and locally selected VID, etc. A remote node receives the RSVP-TE Path message and then allocates the downstream label formed by its local MAC address and locally selected VID, etc. Then, when an Ethernet VLAN packet destined for the remote node is received by the initiator BEB, the initiator BEB will encapsulate the upstream label to the packet and transmit the encapsulated packet to the remote node through the LSP between initiator BEB and the remote node. The remote node will de-encapsulate the encapsulated packet and obtain the Ethernet VLAN packet.

### SUMMARY OF THE INVENTION

Accordingly, the present invention is directed to a method, an apparatus, and a system for IP/optical convergence, applicable to operate an IP/MPLS service on an optical network, thereby realizing the IP/optical convergence.

In an embodiment, the present invention provides a method for IP/optical convergence, which includes the following steps.

A request message for establishing a UNI is received from a first routing device, an optical channel to a second optical device is established, and a GMPLS label is allocated for the optical channel.

A routing message carrying the GMPLS label is sent to a second routing device through the second optical device, so that the second routing device sets the GMPLS label as a virtual local area network identifier (VLAN ID) of a second Ethernet sub-interface on the second routing device.

A first message is received from the second routing device, and a second message carrying the GMPLS label is sent to the first routing device, so that the first routing device sets the GMPLS label as a VLAN ID of a first Ethernet sub-interface on the first routing device.

In an embodiment, the present invention provides a routing device, which includes a sending unit, a receiving unit, and a processing unit.

The sending unit is configured to send a request message for establishing a UNI to an optical device.

The receiving unit is configured to receive an acknowledgement message returned by the optical device. The acknowledgement message carries a GMPLS label.

The processing unit is configured to set the GMPLS label received by the receiving unit as a VLAN ID of an Ethernet sub-interface on the routing device.

In an embodiment, the present invention provides an optical device, which includes a receiving unit, an optical channel establishment unit, and a sending unit.

The receiving unit is configured to receive a request message for establishing a UNI from a first routing device and receive a first acknowledgement message from a second routing device.

The optical channel establishment unit is configured to establish an optical channel between the optical device and a second optical device according to the request message received by the receiving unit and allocate a GMPLS label for the optical channel.

The sending unit is configured to send a routing message carrying the GMPLS label to the second routing device, so that the second routing device sets the GMPLS label as a VLAN ID of a second Ethernet sub-interface on the second routing device, and send a second message carrying the GMPLS label to the first routing device, so that the first routing device sets the GMPLS label as a VLAN ID of a first Ethernet sub-interface on the first routing device.

In an embodiment, the present invention provides a system for realizing IP/optical convergence, which includes a first routing device, a second routing device, a first optical device, and a second optical device. The first routing device is in communication with the first optical device. The second routing device is in communication with the second optical device. The first routing device includes a first Ethernet sub-interface. The second routing device includes a second Ethernet sub-interface.

The first routing device sends a request message for establishing a UNI to the first optical device.

The first routing device receives a second message carrying a GMPLS label sent by the first optical device, and sets the GMPLS label as a VLAN ID of the first Ethernet sub-interface. The first optical device receives the request message from the first routing device, establishes an optical channel between the first optical device and the second optical device according to the request message, allocates the GMPLS label for the optical channel, and sends a routing message carrying the GMPLS label to the second routing device through the second optical device.

A first acknowledgement message is received from the second routing device, and a second acknowledgement message carrying the GMPLS label is sent to the first routing device.

The second routing device receives the routing message forwarded by the second optical device, sets the GMPLS label as a VLAN ID of the second Ethernet sub-interface, and sends a first message to the first optical device through the second optical device.

The technical solutions provided in the embodiments of the present invention have the following advantages.

The GMPLS UNI label is taken as the VLAN ID of the Ethernet sub-interface. Therefore, the existing IP/MPLS service can be operated on the GMPLS UNI through the existing Ethernet sub-interface process, without making any modification to the control plane. At the message forwarding plane, the IP/MPLS service can be realized on the GMPLS UNI through the existing Ethernet sub-interface forwarding process, without requiring an additional GMPLS UNI forwarding table, and the forwarding performance is not influenced.

### BRIEF DESCRIPTION OF THE DRAWINGS

FIG. 1 is a frame diagram of a system for IP/optical convergence according to an embodiment of the present invention;
FIG. 2 is an interaction diagram of a method for IP/optical convergence according to an embodiment of the present invention;
FIG. 3 is a schematic view of a routing device according to an embodiment of the present invention; and
FIG. 4 is a schematic view of an optical device according to an embodiment of the present invention.

### DETAILED DESCRIPTION OF THE EMBODIMENTS

The present invention is hereinafter described in detail with reference to the accompanying drawings and exemplary embodiments.

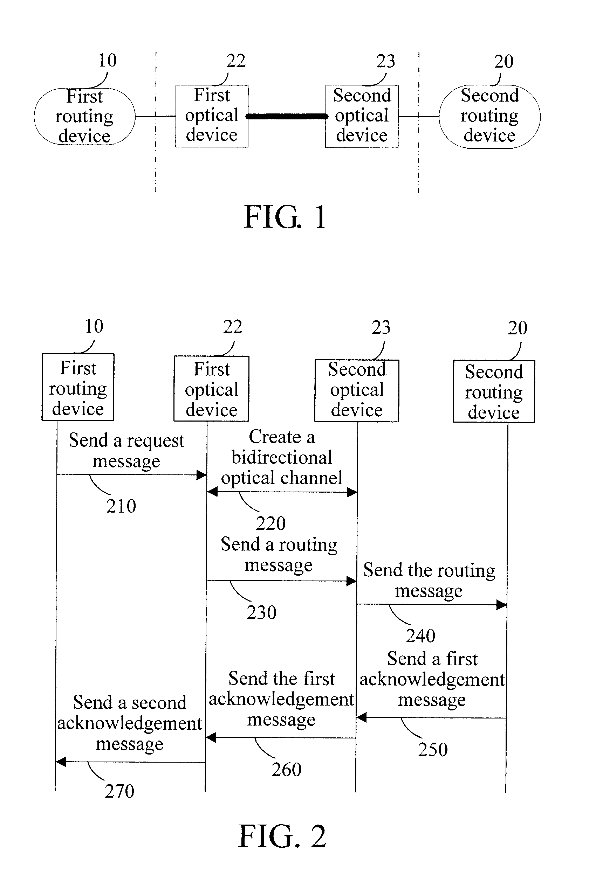

In an embodiment, the present invention provides a system for realizing IP/optical convergence. As shown in FIG. 1, the system includes a first routing device 10, a second routing device 20, a first optical device 22, and a second optical device 23. The first routing device 10 is in communication with the first optical device 22. The second optical device 23 is in communication with the second routing device 20.

A first Ethernet sub-interface is established on the first routing device 10. The established first Ethernet sub-interface is on an Ethernet interface on the first routing device 10, and a relation between the first Ethernet sub-interface and the Ethernet interface is a parent-child relation. The established first Ethernet sub-interface is not configured with a VLAN ID and supports the GMPLS UNI protocol. The first Ethernet sub-interface may be established on the first routing device 10 by the user or established automatically by the first routing device 10. In an embodiment of the present invention, the first routing device establishes the first Ethernet sub-interface automatically when finding that a load is relatively high through flow monitoring.

The first routing device 10 sends a request message for establishing a UNI to the first optical device 22. The request message may be an existing routing message. The request message includes a session and an explicit route object (ERO). The content of the session includes label switching router (LSR) IDs of the first routing device 10 and the second routing device 20. The content of the ERO includes an ingress IP address of the first optical device 22, an egress IP address of the second optical device 23, an ingress IP address of the routing device, priority levels of services, and the like.

The request message further includes a label 1. The label 1 is a GMPLS label allocated, by the first optical device 22, to the optical channel to be established, as suggested by the first routing device 10.

The first optical device 22 receives the request message from the first routing device 10, parses the request message to obtain address information in the request message, and establishes a bidirectional label switch path (LSP) optical channel between the first optical device 22 and the second optical device 23 according to the address information. The establishing process of the LSP is obtained with reference to the process in the prior art.

The first optical device 22 allocates a GMPLS label 2 for the established optical channel. In another embodiment of the present invention, the first optical device 22 takes the label 1 as the GMPLS label of the optical channel.

The first optical device 22 sends a routing message to the second routing device 20 through the second optical device 23. The routing message carries the label 2.

After receiving the routing message, the second routing device 20 establishes a second Ethernet sub-interface automatically. The second Ethernet sub-interface is on an Ethernet interface on the second routing device 20. The second Ethernet sub-interface is not configured with a VLAN ID and supports the GMPLS UNI protocol. The second routing device 20 sets the label 2 as a VLAN ID of the second Ethernet sub-interface. If the conversion is successful, a status of the second Ethernet sub-interface is converted into UP.

If the second Ethernet sub-interface that is not configured with a VLAN ID and supports the GMPLS UNI protocol already exists on the second routing device 20, the second routing device 20 preferably does not establish a second Ethernet sub-interface additionally after receiving the routing message. The second routing device 20 sets the label 2 as the VLAN ID of the second Ethernet sub-interface. If the conversion is successful, a status of the second Ethernet sub-interface is converted into UP.

The second routing device 20 parses the routing message from the second optical device 23, obtains address information, and sends a first message to the first optical device 22 through the second optical device 23 according to the address information. The first message is preferably an existing Recv message.

After receiving the first message, the first optical device 22 generates a second message by carrying the label 2 in the first message, and sends the second message to the first routing device 10. The second message is preferably an existing Recv message.

After receiving the second message, the first routing device 10 parses the second message, and sets the label 2 in the second message as the VLAN ID of the first Ethernet sub-interface. If the conversion process is successful, the first routing device 10 converts a status of the first Ethernet sub-interface into UP; otherwise, the first routing device 10 converts the status of the first Ethernet sub-interface into DOWN.

After the foregoing process, the first routing device 10 may use the first Ethernet sub-interface to communicate with the second routing device 20.

If a failure occurs to the LSP established between the first optical device 22 and the second optical device 23 and the status turns to DOWN, the statuses of the first Ethernet sub-interface and the second Ethernet sub-interface are triggered to DOWN. The first routing device 10 and the second routing device 20 need to perform routing lookup once again. The routing lookup process can be obtained with reference to the process in the prior art.

If the status of the established LSP is DOWN, the first optical device 22 recovers the optical channel. If the recovery is successful, the statuses of the first Ethernet sub-interface and the second Ethernet sub-interface are triggered to UP; otherwise, the statuses of the first Ethernet sub-interface and the second Ethernet sub-interface are always DOWN.

In an embodiment, the present invention provides a method for IP/optical convergence. In the method, the Ethernet interface is expanded, preferably expanded through derivation in this embodiment, that is, on the basis of an Ethernet interface, an Ethernet sub-interface is established, so as to combine the Ethernet sub-interface with the GMPLS UNI protocol, thereby realizing the IP/optical convergence without influencing the existing forwarding service. As shown in FIG 2, the method includes the following steps.

In step 210, a request message for establishing an UNI is received from the first routing device 10.

A first Ethernet sub-interface is established on the first routing device 10. The first Ethernet sub-interface is on an Ethernet interface on the first routing device 10. The first Ethernet sub-interface is not configured with a VLAN ID and supports the GMPLS UNI protocol. In an embodiment of the present invention, the first routing device 10 establishes the first Ethernet sub-interface automatically when finding that a load is relatively high through flow monitoring. In another embodiment of the present invention, the user configures the first Ethernet sub-interface on the first routing device 10.

The first routing device 10 sends the request message for establishing the UNI to the first optical device 22. The request message includes a session and an ERO. The content of the session includes label switching router (LSR) IDs of the first routing device 10 and the second routing device 20. The content of the ERO includes an ingress IP address of the first optical device 22, an egress IP address of the second optical device 23, an ingress IP address of the second routing device 20, priority levels of services, and the like.

The request message further includes a label 1. The label 1 is a GMPLS label allocated, by the first optical device 22, to the optical channel to be established, as suggested by the first routing device 10.

In step 220, a bidirectional optical channel is established between the first optical device 22 and the second optical device 23.

After receiving the request message from the first routing device 10, the first optical device 22 parses the request message, obtains address information in the request message, and establishes a bidirectional LSP, that is, an optical network virtual connection, with the second optical device 23 according to the address information. The specific process can be obtained with reference to the process in the prior art.

The first optical device 22 allocates a GMPLS label 2 to the established LSP. The label 2 is configured to identify the established LSP. In another embodiment of the present invention, the first optical device 22 takes the label 1 as the GMPLS label of the LSP.

In step 230, the first optical device 22 sends a routing path message to the second optical device 23.

The first optical device 22 sends a path message to the optical device 23. The path message carries the label 2, an egress IP address of the second optical device 23, an ingress IP address of the second routing device 20, priority levels of services, and the like.

In step 240, after receiving the path message from the first optical device, the second optical device 23 forwards the path message to the second routing device 20.

In step 250, the second routing device 20 sends a first message to the second optical device 23.

After receiving the path message from the second optical device 23, the second routing device 20 performs a process of establishing a reverse tunnel interface, which includes the following steps.

A second Ethernet sub-interface is established on the second routing device 20. The second Ethernet sub-interface is on an Ethernet interface on the second routing device 20. The second Ethernet sub-interface is not allocated with a VLAN ID and supports the GMPLS UNI protocol. If an Ethernet sub-interface that is not allocated with a VLAN ID and supports the GMPLS UNI protocol already exists on the second routing device 20, the second routing device 20 preferably does not further establish an Ethernet sub-interface after receiving the path message.

The label 2 is set as the VLAN ID of the second Ethernet sub-interface. If the label 2 is successfully converted into the VLAN ID of the second Ethernet sub-interface, a status of the second Ethernet sub-interface is converted into UP, and a first message is sent to the second optical device 23 according to address information in the path message. The first message is preferably an existing Recv message. Otherwise, the status of the second Ethernet sub-interface is converted into DOWN.

In step 260, the second optical device 23 forwards the first message from the second routing device 20 to the first optical device 22.

In step 270, after receiving the first message from the second optical device 23, the first optical device 22 generates a second message by carrying the label 2 in the first message, and sends the second message to the first routing device 10. The second message is preferably an existing Recv message.

After receiving the second message from the first optical device 22, the first routing device 10 obtains the label 2 in the second message, and sets the label 2 as the VLAN ID of the first Ethernet sub-interface. If the above process is successful, a status of the first Ethernet sub-interface is converted into UP; and otherwise, the status of the first Ethernet sub-interface is converted into DOWN.

If a failure occurs to the optical channel established by the first optical device 22 and the status of the optical channel turns into DOWN, the statuses of the first Ethernet sub-interface and the second Ethernet sub-interface are triggered to DOWN.

Once a failure occurs to the established optical channel, the first optical device 22 performs re-negotiation and recovery. If the optical channel fails to be recovered, the statuses of the first Ethernet sub-interface and the second Ethernet sub-interface are always DOWN.

If the status of the first Ethernet sub-interface is DOWN, the first routing device 10 needs to perform routing lookup again. If the status of the second Ethernet sub-interface is DOWN, the second routing device 20 needs to perform routing lookup again.

When the status of the first Ethernet sub-interface on the first routing device 10 turns into UP, the first Ethernet sub-interface is declared to an MPLS control module at a control plane of the first routing device 10 according to the process in the prior art. At this time, the first Ethernet sub-interface bound to the GMPLS UNI tunnel can be used as a common Ethernet interface. A sub-interface control module of the first routing device 10 reports an interface UP event to a routing module. The routing configuration (such as an IP address) and MPLS configuration on the first Ethernet sub-interface become effective. The routing module declares the first Ethernet sub-interface at a routing plane. Subsequently, the first Ethernet sub-interface may be selected during the routing to serve as a hop for the forwarding, or may be selected by the MPLS module to serve as a hop for an MPLS tunnel. The specific process can be obtained with reference to the process in the prior art.

The foregoing request process of establishing the UNI may also be applied in the second routing device 20. The performing process is similar to that of the first routing device 10.

The method provided in the embodiment does not influence the existing services. The GMPLS UNI label is converted into the VLAN ID of the Ethernet sub-interface, so that the Ethernet sub-interface is used in the same way as a common Ethernet interface. At a forwarding plane, the process is performed completely according to the existing forwarding process of the Ethernet sub-interface, and the difference is that the VLAN ID carried in the data packet sent by the first routing device 10 is converted from the GMPLS label and the VLAN ID carried in the data packet received by the second routing device 20 is also converted from the GMPLS label.

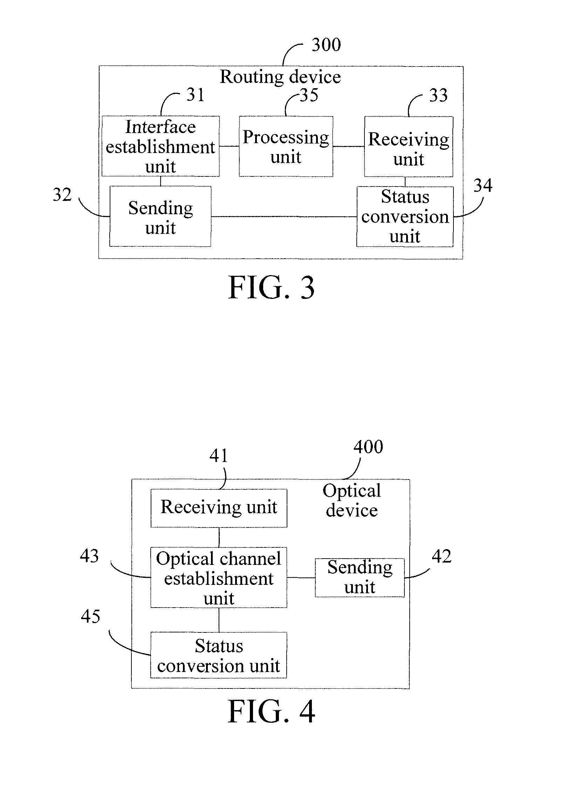

In an embodiment, the present invention provides a routing device. As shown in FIG. 3, the provided routing device 300 includes an interface establishment unit 31, a sending unit 32, a receiving unit 33, a status conversion unit 34, and a processing unit 35.

The interface establishment unit 31 is configured to establish an Ethernet sub-interface. The established Ethernet sub-interface is not allocated with a VLAN ID and supports a GMPLS UNI protocol. If the Ethernet sub-interface is successfully established, the sending unit 32 is instructed to send a request for establishing a UNI to a first optical device in communication with the routing device 300.

If the user has already configured an Ethernet sub-interface that is not allocated with a VLAN ID and supports the GMPLS UNI protocol on the routing device 300, the interface establishment unit 31 does not need to further establish an Ethernet sub-interface.

The sending unit 32 is configured to send a request message for establishing a UNI to the first optical device in communication with the routing device 300. The request message includes a session and an ERO. The content of the session includes label switching router (LSR) IDs of the routing device 300 and a second routing device. The content of the ERO includes an ingress IP address of the first optical device in communication with the routing device 300, an egress IP address of a second optical device in communication with the second routing device, an ingress IP address of the routing device 300, priority levels of services, and the like.

The request message sent to the first optical device by the sending unit 32 further includes a label 1. The label 1 is a GMPLS label allocated, by the first optical device, to an LSP to be established, as suggested by the routing device 300.

After receiving the request message sent by the routing device 300, the first optical device establishes a bidirectional LSP tunnel with the second optical device. If the bidirectional LSP tunnel is successfully established, the first optical device allocates a GMPLS label 2 to the LSP. The second optical device is in communication with the second routing device.

The receiving unit 33 is configured to receive a message from the first optical device. The message carries the label 2.

The processing unit 35 is configured to set the GMPLS label 2 received by the receiving unit 33 as a VLAN ID of the Ethernet sub-interface established by the interface establishment unit.

The status conversion unit 34 is configured to set a status of the Ethernet sub-interface. When the setting unit successfully sets the label 2 as the VLAN ID of the Ethernet sub-interface, the status conversion unit sets a status of the Ethernet sub-interface to UP; otherwise, the status conversion unit sets the status of the Ethernet sub-interface as DOWN.

When the status of the LSP tunnel established by the optical device turns into DOWN due to a failure, the status conversion unit 34 converts the status of the Ethernet sub-interface into DOWN. At this time, the processing unit 35 is further configured to perform routing lookup once again.

The routing device provided in the embodiment can not only accomplish common IP/MPLS services, but also realize IP/optical convergence, so as to apply the IP/MPLS in the GMPLS UNI. In such an application process, the existing forwarding process does not need to be changed.

In an embodiment, the present invention provides an optical device. As shown in FIG. 4, the provided optical device 400 includes a receiving unit 41, an optical channel establishment unit 43, a sending unit 42, and a status conversion unit 45.

The receiving unit 41 is configured to receive a request message for establishing a UNI from a first routing device, and receive a first message from a second routing device. The first message is preferably an existing Recv message.

The optical channel establishment unit 43 is configured to establish an LSP optical channel between the optical device 400 and a second optical device according to the request message received by the receiving unit 41 and allocate a GMPLS label to the optical channel. The second optical device is in communication with the second routing device.

The sending unit 42 is configured to send a routing message carrying the GMPLS label to the second routing device through the second optical device, so that the second routing device sets the GMPLS label as a VLAN ID of an Ethernet sub-interface on the second routing device, and send a second message carrying the GMPLS label to the first routing device, so that the first routing device sets the GMPLS label as a VLAN ID of an Ethernet sub-interface on the first routing device. The second message is preferably an existing Recv message.

The status conversion unit 45 is configured to convert a status of the optical channel into UP when the optical channel establishment unit 43 establishes the optical channel successfully, and convert the status of the optical channel into DOWN when a failure occurs to the optical channel and instruct the optical channel establishment unit 43 to recover the optical channel. If the optical channel establishment unit 43 recovers the optical channel successfully, the status of the optical channel is converted into UP, and the process that the optical channel establishment unit 43 recovers the optical channel can be obtained with reference to the process in the prior art.

Persons of ordinary skill in the art should understand that, the optical device provided in the embodiment can be configured independent from the routing device in communication with the optical device or configured within the routing device in communication with the optical device.

The optical device provided in the embodiment enables the IP/MPLS service to be operated in the optical network by establishing an optical channel, so that the transmission speed becomes faster, the capacity becomes larger, and meanwhile, the routing device in communication with the optical device does not need to change the existing IP/MPLS process.

It will be apparent to persons skilled in the art that various modifications and variations can be made to the present invention without departing from the scope of the present invention. The invention is intended to cover the modifications and variations provided that they fall within the scope as defined by the appended claims or their equivalents.

## Claims

1. A method for Internet Protocol, IP,/optical convergence, comprising:
establishing (220), by a first optical device (22), a bidirectional Label Switch Path, LSP, optical channel with a second optical device (23) after receiving a request message (210) for establishing a user network interface, UNI, from a first routing device (10), wherein the request message comprises an ingress IP address of the first optical device (22), an egress IP address of the second optical device (23) and an ingress IP address of a second routing device (20);
allocating (220), by the first optical device (22), a generalized multiprotocol label switching, GMPLS, label for the optical channel;
sending (230, 240), by the first optical device (22), a routing message carrying the GMPLS label allocated for the optical channel to the second routing device (20) through the second optical device (23), so that the second routing device (20) sets the GMPLS label allocated for the optical channel as a virtual local area network identifier, VLAN ID, of a second Ethernet sub-interface on the second routing device;
receiving (250, 260), by the first optical device (22), a first acknowledge message from the second routing device; and
sending (270), by the first optical device (22), a second acknowledge message carrying the GMPLS label allocated for the optical channel to the first routing device (10), so that the first routing device sets the GMPLS label as a VLAN ID of a first Ethernet sub-interface on the first routing device.

2. The method according to claim 1, wherein the first Ethernet sub-interface and the second Ethernet sub-interface are not configured with a VLAN ID during the establishment of the first and second Ethernet sub-interfaces, and the first and second Ethernet sub-interfaces support a GMPLS UNI protocol.

3. The method according to claim 2, wherein the first Ethernet sub-interface is on an Ethernet interface on the first routing device, and the second Ethernet sub-interface is on an Ethernet interface on the second routing device.

4. The method according to claim 1, wherein the first acknowledge message and the second acknowledge message are Recv messages.

5. The method according to any one of claims 1 to 4, further comprising:
recovering the optical channel if a status of the optical channel is DOWN.

6. A routing device (10), configured to:
send a request message for establishing a user network interface, UNI, to an optical device (22) in communication with the routing device (10), wherein the request message comprises an ingress IP address of the first optical device (22), an egress IP address of another optical device (23) and an ingress IP address of another routing device (20);
receive an acknowledge message from the optical device 22, wherein the message carries a generalized multiprotocol label switching, GMPLS, label; and
set the GMPLS label received by the receiving unit as a virtual local area network identifier, VLAN ID, of an Ethernet sub-interface on the routing device.

7. The routing device according to claim 6, wherein the routing device is further configured to:
establish the Ethernet sub-interface before sending the request message for establishing the UNI to the optical device (22), wherein the Ethernet sub-interface is not allocated with a VLAN ID during the establishment of the Ethernet sub-interface, and the Ethernet sub-interface supports a GMPLS UNI protocol; and
convert a status of the Ethernet sub-interface into UP when the processing unit sets the GMPLS label as the VLAN ID of the Ethernet sub-interface successfully; and otherwise, convert the status of the Ethernet sub-interface into DOWN.

8. The routing device according to claim 7, wherein the routing device is further configured to perform routing lookup again when the status of the Ethernet sub-interface is DOWN.

9. An optical device (22), configured to:
receive a request message for establishing a user network interface, UNI, from a first routing device (10), wherein the request message comprises an ingress IP address of the optical device (22), an egress IP address of another optical device (23) and an ingress IP address of a second routing device (20);establish a bidirectional LSP optical channel between the optical device (22) and the other optical device (23) according to the request message;
allocate a generalized multiprotocol label switching, GMPLS, label for the optical channel;
send a routing message carrying the GMPLS label allocated for the optical channel to the second routing device (20) through the other optical device (23);
receive a first acknowledge message from the second routing device (20); and
send a second acknowledge message carrying the GMPLS label allocated for the optical channel to the first routing device (10).

10. The optical device according to claim 9, wherein the optical device is further configured to
convert a status of the optical channel into UP when the optical device successfully establishes the optical channel;
convert the status of the optical channel into DOWN when a failure occurs to the optical channel, and recover the optical channel.

11. A system for realizing Internet Protocol, IP,/ optical convergence, comprising:
a first routing device according to one of the claims 6 to 8,
a second routing device according to one of the claims 6 to 8,
a first optical device according to claim 9 or 10, and
a second optical device according to claim 9 or 10.

## Patentansprüche

1. Verfahren für Internet-Protokoll, IP,/Opto-Konvergenz, IP/Opto-Konvergenz, umfassend:
Einrichten (220), durch eine erste Optikvorrichtung (22), eines bidirektionalen Etikettschaltweg-Optikkanals (Label Switch Path optical channel, LSP-Optikkanal) mit einer zweiten Optikvorrichtung (23) nach dem Empfangen einer Anfragenachricht (210) zum Einrichten einer Benutzernetzwerkschnittstelle (user network interface, UNI) von einer ersten Router-Vorrichtung (10), wobei die Anfragenachricht eine Eingangs-IP-Adresse der ersten Optikvorrichtung (22), eine Ausgangs-IP-Adresse der zweiten Optikvorrichtung (23) und eine Eingangs-IP-Adresse einer zweiten Router-Vorrichtung (20) umfasst;
Zuweisen (220), durch die erste Optikvorrichtung (22), eines verallgemeinerten Multiprotokolletikettschalt-Etiketts (generalized multiprotocol label switching label, GMPLS-Etikett) für den Optikkanal;
Senden (230, 240), durch die erste Optikvorrichtung (22), einer Router-Nachricht, die das für den Optikkanal zu der zweiten Router-Vorrichtung (20) zugewiesene GMPLS-Etikett trägt, durch die zweite Optikvorrichtung (23), so dass die zweite Router-Vorrichtung (20) das dem Optikkanal zugewiesene GMPLS-Etikett als eine virtuelle Lokalnetzwerkkennung (virtual local area network identifier, VLAN ID) einer zweiten Ethernet-Subschnittstelle auf der zweiten Routervorrichtung setzt;
Empfangen (250, 260), durch die erste Optikvorrichtung (22), einer ersten Bestätigungsnachricht von der zweiten Router-Vorrichtung, und
Senden (270), durch die erste Optikvorrichtung (22), einer zweiten Bestätigungsnachricht, die das für den Optikkanal zu der ersten Router-Vorrichtung (10) zugewiesene GMPLS-Etikett trägt, so dass die erste Router-Vorrichtung das GMPLS-Etikett als eine VLAN ID einer ersten Ethernet-Subschnittstelle auf der ersten Router-Vorrichtung setzt.

2. Verfahren nach Anspruch 1, wobei die erste Ethernet-Subschnittstelle und die zweite Ethernet-Subschnittstelle, während der Einrichtung der ersten und der zweiten Ethernet-Subschnittstelle, nicht mit einer VLAN ID konfiguriert werden und die erste und die zweite Ethernet-Subschnittstelle ein GMPLS-UNI-Protokoll unterstützen.

3. Verfahren nach Anspruch 2, wobei sich die erste Ethernet-Subschnittstelle auf einer Ethernet-Schnittstelle auf der ersten Router-Vorrichtung befindet und sich die zweite Ethernet-Subschnittstelle auf einer Ethernet-Schnittstelle auf der zweiten Router-Vorrichtung befindet.

4. Verfahren nach Anspruch 1, wobei die erste Bestätigungsnachricht und die zweite Bestätigungsnachricht "Recv"-Nachrichten sind.

5. Verfahren nach einem der Ansprüche 1 bis 4, ferner umfassend:
Wiederherstellen des Optikkanals, falls der Status des Optikkanals "DOWN" ist.

6. Router-Vorrichtung (10), die ausgelegt ist zum:
Senden einer Anfragenachricht zum Einrichten einer Benutzernetzwerkschnittstelle, UNI, zu einer Optikvorrichtung (22) in Kommunikation mit der Router-Vorrichtung (10), wobei die Anfragenachricht eine Eingangs-IP-Adresse der ersten Optikvorrichtung (22), eine Ausgangs-IP-Adresse einer anderen Optikvorrichtung (23) und eine Eingangs-IP-Adresse einer anderen Router-Vorrichtung (20) umfasst;
Empfangen einer Bestätigungsnachricht von der Optikvorrichtung (22),
wobei die Nachricht ein verallgemeinertes Multiprotokolletikettschalt-Etikett, GMPLS-Etikett, trägt; und
Setzen des von der Empfangseinheit empfangenen GMPLS-Etiketts als eine virtuelle Lokalnetzwerkkennung, VLAN ID, einer Ethernet-Subschnittstelle auf der Router-Vorrichtung.

7. Router-Vorrichtung nach Anspruch 6, wobei die Router-Vorrichtung ferner ausgelegt ist, zum
Einrichten der Ethernet-Subschnittstelle vor dem Senden der Anfragenachricht zum Einrichten der UNI zu der Optikvorrichtung (22), wobei der Ethernet-Subschnittstelle während der Einrichtung der Ethernet-Subschnittstelle keine VLAN ID zugewiesen wird, und die Ethernet-Subschnittstelle ein GMPLS UNI-Protokoll unterstützt; und
Umwandeln eines Status der Ethernet-Subschnittstelle in "UP", wenn die Verarbeitungsinheit das GMPLS-Etikett erfolgreich als die VLAN ID der Ethernet-Subschnittstelle einsetzt; und ansonsten den Status der Ethernet-Subschnittstelle in "DOWN" umwandelt.

8. Router-Vorrichtung nach Anspruch 7, wobei die Router-Vorrichtung ferner dafür ausgelegt ist, wieder ein "Routing Lookup" durchzuführen, wenn der Status der Ethernet-Subschnittstelle "DOWN" ist.

9. Optikvorrichtung (22), die ausgelegt ist zum:
Empfangen einer Anfragenachricht zum Einrichten einer Benutzernetzwerkschnittstelle, UNI, von einer ersten Router-Vorrichtung (10), wobei die Anfragenachricht eine Eingangs-IP-Adresse der Optikvorrichtung (22), eine Ausgangs-IP-Adresse einer anderen Optikvorrichtung (23) und eine Eingangs-IP-Adresse einer zweiten Router-Vorrichtung (20) umfasst; Einrichten eines bidirektionalen LSP-Optikkanals zwischen der Optikvorrichtung (22) und der anderen Optikvorrichtung (23) gemäß der Anfragenachricht;
Zuweisen eines verallgemeinerten Multiprotokolletikettschalt-Etiketts, GMPLS-Etiketts, für den Optikkanal;
Senden einer Router-Nachricht, die das GMPLS-Etikett trägt, das dem Optikkanal zu der zweiten Router-Vorrichtung (20) zugewiesen ist, durch die andere Optikvorrichtung (23);
Empfangen einer ersten Bestätigungsnachricht von der zweiten Router-Vorrichtung (20), und
Senden einer zweiten Bestätigungsnachricht, die das GMPLS-Etikett trägt, das dem Optikkanal zu der ersten Router-Vorrichtung (10) zugewiesen ist.

10. Optikvorrichtung nach Anspruch 9, wobei die Optikvorrichtung ferner ausgelegt ist zum:
Wandeln eines Status des Optikkanals in "UP", wenn die Optikvorrichtung erfolgreich den Optikkanal einrichtet;
Wandeln des Status des Optikkanals in "DOWN", wenn ein Versagen des Optikkanals auftritt, und Wiederherstellen des Optikkanals.

11. System zum Realisieren von IP/Opto-Konvergenz, das umfasst:
eine erste Router-Vorrichtung nach einem der Ansprüche 6 bis 8,
eine zweite Router-Vorrichtung nach einem der Ansprüche 6 bis 8,
eine erste Optikvorrichtung nach Anspruch 9 oder 10, und
eine zweite Optikvorrichtung nach Anspruch 9 oder 10.

## Revendications

1. Procédé pour la convergence Protocole Internet, IP, / optique, comprenant :
l'établissement (220), par un premier dispositif optique (22), d'un canal optique bidirectionnel à trajet de commutation d'étiquettes, LSP (Label Switch Path), avec un second dispositif optique (23) après avoir reçu un message de demande (210) d'établissement d'une interface de réseau d'utilisateur, UNI (User Network Interface), en provenance d'un premier dispositif de routage (10), dans lequel le message de demande comprend une adresse IP d'entrée du premier dispositif optique (22), une adresse IP de sortie du second dispositif optique (23) et une adresse IP d'entrée d'un second dispositif de routage (20) ;
l'allocation (220), par le premier dispositif optique (22), d'une étiquette généralisée de commutation d'étiquettes multiprotocole, GMPLS (Generalized Multiprotocol Label Switching), pour le canal optique ;
l'envoi (230, 240), par le premier dispositif optique (22), d'un message de routage transportant l'étiquette GMPLS allouée pour le canal optique au second dispositif de routage (20) par l'intermédiaire du second dispositif optique (23), de manière à ce que le second dispositif de routage (20) règle l'étiquette GMPLS allouée pour le canal optique comme étant un identifiant de réseau local virtuel, ID de VLAN (Virtual Local Area Network ID), d'une seconde sous-interface Ethernet sur le second dispositif de routage ;
la réception (250, 260), par le premier dispositif optique (22), d'un premier message d'acquittement en provenance du second dispositif de routage ;
et l'envoi (270), par le premier dispositif optique (22), d'un second message d'acquittement transportant l'étiquette GMPLS allouée pour le canal optique au premier dispositif de routage (10), de manière à ce que le premier dispositif de routage règle l'étiquette GMPLS comme étant un ID de VLAN d'une première sous-interface Ethernet sur le premier dispositif de routage.

2. Procédé selon la revendication 1, dans lequel la première sous-interface Ethernet et la seconde sous-interface Ethernet ne sont pas configurées avec un ID de VLAN pendant l'établissement des première et seconde sous-interfaces Ethernet, et les première et seconde sous-interfaces Ethernet prennent en charge un protocole GMPLS UNI.

3. Procédé selon la revendication 2, dans lequel la première sous-interface Ethernet est sur une interface Ethernet sur le premier dispositif de routage, et la seconde sous-interface Ethernet est sur une interface Ethernet sur le second dispositif de routage.

4. Procédé selon la revendication 1, dans lequel le premier message d'acquittement et le second message d'acquittement sont des messages Recv.

5. Procédé selon l'une quelconque des revendications 1 à 4, comprenant en outre :
la récupération du canal optique si un état du canal optique est DOWN (hors service).

6. Dispositif de routage (10), configuré pour :
envoyer un message de demande d'établissement d'une interface réseau d'utilisateur, UNI, à un dispositif optique (22) en communication avec le dispositif de routage (10), dans lequel le message de demande comprend une adresse IP d'entrée du premier dispositif optique (22), une adresse IP de sortie d'un autre dispositif optique (23) et une adresse IP d'entrée d'un autre dispositif de routage (20) ;
recevoir un message d'acquittement en provenance du dispositif optique (22), dans lequel le message transporte une étiquette généralisée de commutation d'étiquettes multiprotocole, GMPLS ; et
régler l'étiquette GMPLS reçue par l'unité de réception comme étant un identifiant de réseau local virtuel, ID de VLAN, d'une sous-interface Ethernet sur le périphérique de routage.

7. Dispositif de routage selon la revendication 6, dans lequel le dispositif de routage est en outre configuré pour :
établir la sous-interface Ethernet avant d'envoyer le message de demande d'établissement de l'UNI au dispositif optique (22), dans lequel la sous-interface Ethernet n'est pas allouée à un ID de VLAN pendant l'établissement de la sous-interface Ethernet, et la sous-interface Ethernet prend en charge un protocole GMPLS UNI ; et
faire passer un état de la sous-interface Ethernet à UP (en service) lorsque l'unité de traitement règle l'étiquette GMPLS comme étant l'ID de VLAN de la sous-interface Ethernet avec succès ; et
sinon, faire passer l'état de la sous-interface Ethernet à DOWN.

8. Dispositif de routage selon la revendication 7, dans lequel le dispositif de routage est en outre configuré pour exécuter à nouveau une consultation de routage lorsque l'état de la sous-interface Ethernet est DOWN.

9. Dispositif optique (22), configuré pour :
recevoir un message de demande d'établissement d'une interface réseau d'utilisateur, UNI, en provenance d'un premier dispositif de routage (10), dans lequel le message de demande comprend une adresse IP d'entrée du dispositif optique (22), une adresse IP de sortie d'un autre dispositif optique (23) et une adresse IP d'entrée d'un second dispositif de routage (20) ; établir un canal optique bidirectionnel LSP entre le dispositif optique (22) et l'autre dispositif optique (23) conformément au message de demande ;
allouer une étiquette généralisée de commutation d'étiquettes multiprotocole, GMPLS, pour le canal optique ;
envoyer un message de routage transportant l'étiquette GMPLS allouée pour le canal optique au second dispositif de routage (20) par l'intermédiaire de l'autre dispositif optique (23) ;
recevoir un premier message d'acquittement en provenance du second dispositif de routage (20) ;
et envoyer un second message d'acquittement transportant l'étiquette GMPLS allouée pour le canal optique au premier dispositif de routage (10).

10. Dispositif optique selon la revendication 9, dans lequel le dispositif optique est en outre configuré pour :
faire passer un état du canal optique à UP lorsque le dispositif optique établit avec succès le canal optique;
faire passer l'état du canal optique à DOWN lorsqu'une défaillance se produit sur le canal optique, et récupérer le canal optique.

11. Système destiné à réaliser la convergence protocole Internet, IP, / optique, comprenant :
un premier dispositif de routage selon l'une quelconque des revendications 6 à 8,
un second dispositif de routage selon l'une quelconque des revendications 6 à 8,
un premier dispositif optique selon la revendication 9 ou 10, et
un second dispositif optique selon la revendication 9 ou 10.
